Europäisches Patentamt

European Patent Office

Office européen des brevets

(11) Publication number: **0 165 715**
**B1**

## EUROPEAN PATENT SPECIFICATION

(45) Date of publication of patent specification: **03.01.90**

(51) Int. Cl.⁵: **F 16 J 15/32**

(21) Application number: **85303560.8**

(22) Date of filing: **21.05.85**

(54) **High pressure shaft seal.**

(30) Priority: **30.05.84 US 615159**

(43) Date of publication of application:
**27.12.85 Bulletin 85/52**

(45) Publication of the grant of the patent:
**03.01.90 Bulletin 90/01**

(84) Designated Contracting States:
**AT BE CH DE FR GB IT LI LU NL SE**

(56) References cited:
**DE-A-2 218 376**
**DE-A-3 221 526**
**DE-C-3 220 192**
**FR-A-1 345 547**
**US-A-2 804 324**

(73) Proprietor: **GARLOCK INC.**
**430 Park Avenue**
**New York, New York 10022 (US)**

(72) Inventor: **Cather, Douglas A.**
**1325 Bucknell Avenue**
**Gastonia North Carolina 28054 (US)**

(74) Representative: **Fincke, Karl Theodor, Dipl.-Phys.Dr. et al**
**Patentanwälte Dipl.-Ing. H.Weickmann Dipl.-Phys.Dr. K.Fincke Dipl.-Ing. F.A.Weickmann Dipl.-Chem. B. Huber Dr. Ing. H. Liska Dipl.-Phys.Dr. J. Prechtel Postfach 860820 D-8000 München 86 (DE)**

Courier Press, Leamington Spa, England.

## Description

This invention relates to a shaft seal according to the preamble of claim 1.

A wide variety of lip type seals have been used in association with relatively rotating machine elements for many years. Such seals have generally provided satisfactory and long-lived service in those applications involving little or no differential fluid pressure. However, as the contained fluid pressure increases, functional problems begin to arise in seal operation. Among the more common problems are accelerated lip wear and lip distortion. In more extreme cases, lip distortion can actually go so far as fracture of the sealing element, turning the lip inside out.

Numerous attemps have been made to overcome these and other problems with a variety of seal designs. Some measure of success has been achieved, but the results have not been fully satisfactory. For example a variety of back-up members have been employed to prevent or reduce lip distortion. Also, low-friction lip liners have been used to reduce excessive lip wear. Examples of previous designs with back-up members are illustrated and described in U.S. Patents 3,254,898, 3,495,843 and 4,300,778. Low-friction lip liners are shown in U.S. Patents 3,495,843 and 4,289,321. While each of these prior art designs may provide some service improvement in high pressure sealing, each suffers from one or more shortcomings such as complex and expensive design, an inability to function properly in low pressure applications or an inability to accomodate shaft runout.

U.S. Patent 3,495,843 illustrates a lip type seal having a low-friction resin liner and a back-up piece designed to reduce lip distortion and/or reversal upon exposure to high pressure. However, the back-up piece or insert is a separate element which must be fabricated separately and snapped into place. Thus the element can separate in service unless it is positively retained by the plate shown in Figure 2. It is also significant that the liner does not extend along the whole surface of the elastomeric element and there is no contact between the shell and the liner. The flexibility changes abruptly at the end of this liner and thus may concentrate stresses in the area and bring about premature failure, particularly where there is any degree of shaft runout.

U.S. Patent 4,289,321 describes a lip type pressure seal having a PTFE liner. However, this is a dual lip seal and is designed to function between two areas of pressure and to allow purging of pressure in one direction but not in the other. Again, there is no contact between the liner and the shell.

U.S. Patent 3,254,898 describes another lip type pressure seal which appears to be similar to that of the present invention but which is significantly different in several respects. Among these differences, perhaps the most significant is the fact that there are really two sealing lips and there is no bond between them thus allowing them to function independently of one another. Further, the old structure is of the assembled type and rather complex in comparison to the present invention.

U.S. Patent 2,804,324 describes a shaft seal according to the preamble of claim 1 comprising a rigid shell having a radially extending portion which is coaxially connected, at a first perimeter with a first substantially cylindrical portion, an elastomeric body bonded to part of the shell and a sleeve of low-friction material which forms a sealing lip and an annular sealing surface adjacent the sealing lip, wherein the shell comprises a substantially cylindrical ring integrally connected with the radially-extending portion at a second perimeter to prevent the sealing lip moving axially past the radially-extending portion. The ring is at the inner perimeter of the radial portion. The sleeve extends axially from the sealing lip to the radially extending portion of the shell over the outer surface of the shell and has a radially extending flange in contact with the radial portion of the shell.

From FR—A—1 345 547 it is known in a similar shaft seal not to bond the sealing lip to the axially extending portion of the shell to allow flexing of the sealing lip.

The object underlying the present invention is to prevent the sleeve from contacting any sharp corners and to spread the flexing of the elastomeric body over a broader area and to spread stresses in the elastomeric body.

The accomplishment of this object according to the present invention is recited in claim 1. Preferred embodiments are described in the subclaims.

An embodiment of the present invention will now be described by way of example with reference to the accompanying drawings in which:

Figure 1 is a partial cross-sectional view showing a preferred embodiment of a seal according to the invention in a ready-to-instal configuration,

Figure 2 is a partial cross-sectional view similar to Figure 1 except that the seal is shown installed between a housing and a shaft,

Figure 3 is a view similar to that of Figure 2 except that the seal is distorted to illustrate the effect of pressure.

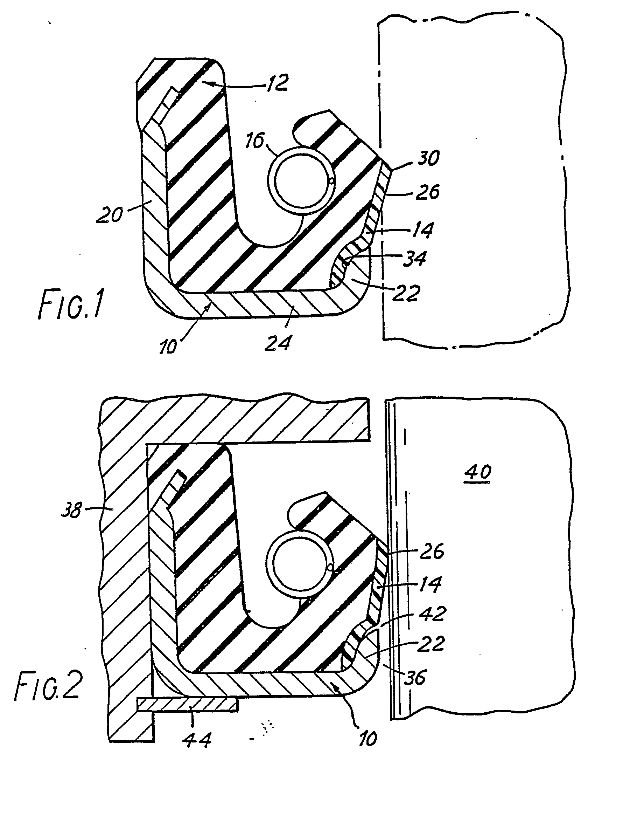

Referring to the drawings, Figure 1 shows a preferred embodiment of the invention including a rigid metal shell 10, an elastomeric body 12, having a low-friction portion in the form of a liner sleeve 14 and a garter spring 16.

The shell 10 comprises a substantially cylindrical portion 20, a cylindrical ring 22 and a radially extending portion 24, all forming the shell 10 into a more or less U-shaped member. The ring 22 of the shell 10 is shorter in axial extent than the portion 20. The elastomeric body 12 is also generally U-shaped and is bonded to the cylindrical portion 20 and the radially extending portion of the shell 10. A sealing surface 26 of the elastomeric body 12 is formed on to the low-friction liner sleeve 14 so that the shell 10 and the body 12 constitute a unitary structure. The liner sleeve 14 extends generally axially from at least a sealing lip 30 along the sealing surface 26 of the elastomeric body 12 to a point at least between the sealing surface 26 and the cylindrical ring 22 and preferably to a point in contact with the radially extending portion 24 of the shell 10. At all points of contact, the liner sleeve 14 is bonded to the body 12, but nowhere is it bonded to shell 10. In this manner, the whole sealing surface 26 of the elastomeric body 12 is more freely flexible in the radial direction while at the same time the cylindrical ring 22 and the radially extending portion 24 support the sealing surface 26 against high internal pressure.

The cylindrical ring 22 is provided with a convex radiused surface 34 to prevent the liner sleeve 14 from contacting any sharp corners and to spread the flexing of the body 12 over a broader area and thus reduce stress.

In Figure 2 the seal is shown in an installed configuration between a machine housing 38 and a relatively rotatable shaft 40 with zero or very low internal pressure. As the seal is installed over the shaft 40 the sealing surface 26 flexes radially outwards. Since the liner sleeve 14 and the shell 10 are nowhere bonded to one another, the sealing surface 26 is free to flex over its whole axial length and in zero or low pressure situations a gap 42 may be formed between the cylindrical ring 22 and the liner sleeve 14. The cylindrical ring 22 of the shell 10 should preferably have a shaft clearance or gap 36 not exceeding 0.1 cm on the diameter and more preferably not exceeding 0.05 cm. The extent of shaft clearance will be governed by the anticipated shaft runout and by the amount of fluid pressure to be sealed.

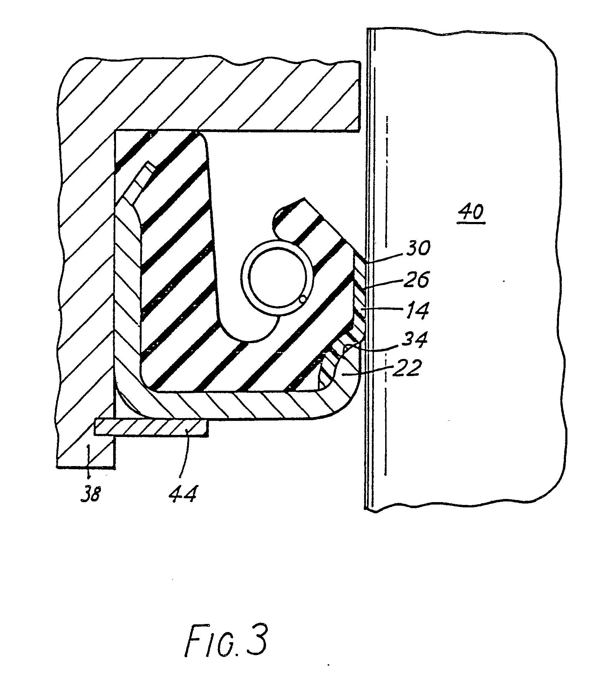

In Figure 3, the seal is again shown in an installed configuration but with substantial internal pressure. Thus, the sealing surface 26 is flexed radially inwards and axially outwards in reaction to the pressure, and the gap 42, as seen in Figure 2, is totally closed. The shaft contact area or band of the sealing lip 30 is substantially increased, but the low-friction nature of the liner sleeve 14 keeps wear to a minimum. The radiused surface 34 of the cylindrical ring 22 of the shell 10 supports a portion of the liner sleeve 14 but does not have a tendency to cut the liner sleeve 14. At the same time, since there is no bonding of the liner sleeve 14 to the shell 10 along the radiused surface 34 the sealing surface 26 and the liner sleeve 14 bonded thereto are flexible over their full axial extent. Thus, they are less prone to stress fractures and they are better able to compensate for shaft eccentricity.

The metal shell 10 will most often be made of carbon steel but other metals and alloys such as brass, stainless steel and aluminium may be used. In a like manner, the elastomeric body 12 may most commonly be of nitrile compounds but other elastomers such as neoprene, fluoroelastomers and others will be used according to various fluids to be sealed. The low-friction liner sleeve 14 is preferably made of polytetrafluoroethylene (PTFE) although other low-friction resins such as polyamides may be used. Finally, the garter spring 16 may be of carbon steel or stainless steel.

In those installations where any substantial fluid pressure is to be retained, means should be provided to retain the seal in the sealing position. For example, a snap ring 44 is shown in Figures 2 and 3 which retains the seal assembly in a housing 38. Alternative means could be a plate attached to the housing 38. Another alternative could be a relatively thick plate with an axially outward extending seal receiving bore. The seal would in this case be installed with the radially extending portion 24 against the bottom of the seal receiving bore.

While the full pressure sealing capabilities of the present invention have not yet been determined, experience thus far has shown good results in sealing pressures up to 1400 kg/cm$^2$ with low surface speed and rotary or oscillating shaft motion. At surface speeds of the order of 300 meters per minute, pressures of the order of 70 kg/cm$^2$ have been sealed.

For the sake of convenience, there is illustrated a seal intended to be pressed into a housing bore and to seal against a rotary shaft. However, it is to be understood that the invention may be equally well embodied in a seal designed to be pressed onto a shaft or axle and to seal against a relatively rotatable housing. Also for convenience, the seal has been illustrated with a garter spring. However, other springs, such as stainless steel finger springs, may be used and under appropriate circumstances, it may be unnecessary to have any spring.

It is also to be noted that throughout the preceding description and the following claims, the terms substantially cylindrical and generally axially extending, in reference to portions of the metal shell and the elastomeric body, are intended to encompass embodiments where there is something of a frustoconical bias, particularly in those parts which form and support the sealing portion.

Such a lip type shaft seal will effectively seal against substantial fluid pressure while providing good operating life. It will also accommodate greater degrees of shaft runout than previous pressure seal designs while retaining a simplicity of design and a low manufacturing cost.

## Claims

1. A shaft seal comprising a rigid shell (10) having a radially extending portion (24) which is coaxially connected, at a first perimeter, with a first substantially cylindrical portion (20), an elastomeric body (12) bonded to part of the shell (10) and a sleeve (14) of low friction material which forms a sealing lip (30) and an annular sealing surface (26) adjacent the sealing lip (30), wherein the shell (10) comprises a substantially cylindrical ring (22) integrally connected with the radially extending portion (24) at a second perimeter, wherein the elastomeric body (12) is bonded to the radially extending portion (24) of the shell (10) but free of the ring (22) and the sleeve (14) is bonded to the elastomeric body (12) and extends axially over the surface of the ring (22) adjacent the elastomeric body (12),

characterized in

that the ring (22) is provided with a convex radiused surface (34) in direction to the elastomeric body (12) to which surface (34) the sleeve (14) is not bonded to prevent the sleeve (14) from contacting any sharp corners and to spread the flexing of the elastomeric body (12) over a broader area and to spread stresses in the elastomeric body (12).

2. A shaft seal as claimed in claim 1 characterized in that said sleeve (14) abuts the convex radiused surface (34) of the ring (22) when the lip (30) is not in contact with a relatively rotatable machine element (40).

3. A shaft seal as claimed in claim 1 or 2 characterized in that the sleeve (14) extends over the convex radiused surface (34) of the ring (22) to a point adjacent the radially extending portion (24) of said shell (10).

4. A shaft seal as claimed in any of the preceding claims, characterized in that the ring (22) is axially shorter than the first substantially cylindrical portion (20).

5. A shaft seal as claimed in any of the preceding claims, characterized in that the second perimeter is the inner perimeter of the radially extending portion (24).

6. A shaft seal as claimed in any of the preceding claims, characterized in that a spring (16) is adapted to maintain the sealing surface (26) in sealing contact with a relatively rotatable machine element (40).

7. A shaft as claimed in claim 6 characterized in that the spring is a garter spring (16).

**Patentansprüche**

1. Wellendichtung mit einer starren Hülle (10), die ein koaxial an einem ersten Umfang mit einem ersten im wesentlichen zylindrischen Teil (20) verbundenes radial verlaufendes Teil (24) aufweist, mit einem mit einem Teil der Hülle (10) verbundenen elastischen Körper (12) und mit einer Hülse (14) aus einem Material geringer Reibung, welche eine Dichtungslippe (30) sowie eine zur Dichtungslippe (30) benachbarte ringförmige Dichtungsfläche (26) bildet, wobei die Hülle (10) einen mit dem radial verlaufenden Teil (24) an einem zweiten Umfang einstückig verbundenen im wesentlichen zylindrischen Ring (22) umfaßt, wobei der elastische Körper (12) frei vom Ring (22) mit dem radial verlaufenden Teil (24) der Hülle (10) verbunden ist und wobei die Hülse (14) mit dem elastischen Körper (12) verbunden ist und sich benachbart zum elastischen Körper (12) axial über die Fläche des Rings (22) erstreckt,

dadurch gekennzeichnet, daß

der Ring (22) eine in Richtung des elastischen Körpers (12) konvex gerundete Fläche (34) aufweist, mit der die Hülse (14) nicht verbunden ist, um einen Kontakt der Hülse (14) mit scharfen Ecken sowie ein Ausbreiten des Biegens des elastischen Körpers (12) über einen breiteren Bereich zu vermeiden und um Spannungen im elastischen Körper (12) auszubreiten.

2. Wellendichtung nach Anspruch 1, dadurch gekennzeichnet, daß die Hülse (14) an der konvex gerundeten Fläche (34) des Rings (22) anstößt, wenn die Lippe (30) nicht mit einem relativ drehbaren Maschinenelement (40) in Kontakt steht.

3. Wellendichtung nach Anspruch 1 oder 2, dadurch gekennzeichnet, daß die Hülse (14) über die konvex gerundete Fläche (34) des Rings (22) bis zu einer dem radial ausgerichteten Teil (24) der Hülle (10) benachbarten Stelle verläuft.

4. Wellendichtung nach den vorhergehenden Ansprüchen, dadurch gekennzeichnet, daß der Ring (22) axial kürzer als das erste im wesentlichen zylindrische Teil (20) ist.

5. Wellendichtung nach den vorhergehenden Ansprüchen, dadurch gekennzeichnet, daß der zweite Umfang der Innenumfang des radial verlaufenden Teils (24) ist.

6. Wellendichtung nach den vorhergehenden Ansprüchen, dadurch gekennzeichnet, daß eine Feder (16) vorgesehen ist, um die Dichtungsfläche (26) mit dem relativ drehbaren Maschinenelement (40) in Dichtkontakt zu halten.

7. Welle nach Anspruch 6, dadurch gekennzeichnet, daß die Feder eine Rundbandfeder (16) ist.

**Revendications**

1. Joint d'arbre comprenant une coquille rigide (10) présentant une portion (24) s'étendant radialement et reliée coaxialement au niveau d'un premier périmètre à une première portion sensiblement cylindrique (20), un corps en élastomère (12) lié en partie à la coquille (10) et un manchon (14) en un matériau basse friction qui forme une lèvre d'étanchéité (30) et une surface d'étanchéité annulaire (26) adjacente à la lèvre d'étanchéité (30), dans lequel la coquille (10) comprend une partie annulaire sensiblement cylindrique (22) reliée d'un seul tenant à la portion (24) s'étendant radialement au niveau d'un second périmètre, dans lequel le corps en élastomère (12) est lié à la portion (24) de la coquille (10) qui s'étend radialement mais non à la partie annulaire (22), et le manchon (14) est lié au corps en élastomère (12) et s'étend axialement au-dessus de la surface de la partie annulaire (22) qui est adjacente au corps en élastomère (22),

caractérisé en ce que

la partie annulaire (22) comprend une surface convexe (34) en direction du corps en élastomère (12), surface (34) à laquelle le manchon (14) n'est pas lié pour éviter que ce manchon (14) vienne en contact avec des coins aigus, pour répartir la flexion du corps en élastomère (12) sur une région plus importante et pour répartir les contraintes dans le corps en élastomère (12).

2. Joint d'arbre selon la revendication 1, caractérisé en ce que ledit manchon (14) vient buter contre la surface convexe (34) de la partie annulaire (22) quand la lèvre (30) n'est pas en contact avec un élément de machine (40) tournant relativement par rapport à elle.

3. Joint d'arbre selon la revendication 1 ou 2, caractérisé en ce que le manchon (14) s'étend sur la surface convexe (34) de la partie annulaire (22) jusqu'à un point qui est adjacent à la portion (24) de ladite coquille (10) qui s'étend radialement.

4. Joint selon l'une quelconque des revendications précédentes, caractérisé en ce que la partie annulaire (22) est axialement plus courte que la première portion sensiblement cylindrique (20).

5. Joint selon l'une quelconque des revendications précédentes, caractérisé en ce que le second périmètre est le périmètre interne de la portion (24) s'étendant radialement.

6. Joint selon l'une quelconque des revendications précédentes, caractérisé en ce qu'un ressort (16) est adapté à maintenir la surface d'étanchéité (26) en contact d'étanchéité avec un élément de machine (40) tournant relativement par rapport à elle.

7. Joint selon la revendication 5, caractérisé en ce que le ressort est un ressort annulaire (16).

FIG.1

FIG.2

FIG. 3